Europäisches Patentamt
European Patent Office
Office européen des brevets

(11) Veröffentlichungsnummer: **0 416 402 A2**

(12) **EUROPÄISCHE PATENTANMELDUNG**

(21) Anmeldenummer: **90116303.0**

(51) Int. Cl.⁵: **C07F 7/18**, C11D 1/72

(22) Anmeldetag: **25.08.90**

(30) Priorität: **08.09.89 DE 3929866**

(43) Veröffentlichungstag der Anmeldung: **13.03.91 Patentblatt 91/11**

(84) Benannte Vertragsstaaten: **DE FR GB NL**

(71) Anmelder: **BAYER AG**

**W-5090 Leverkusen 1 Bayerwerk(DE)**

(72) Erfinder: **Bloodworth, Robert, Dr.**
**Isidor-Caro-Strasse 42-44**
**W-5000 Köln 80(DE)**
Erfinder: **Penners, Günther, Dr.**
**Körnerstrasse 6**
**W-5090 Leverkusen 1(DE)**
Erfinder: **Podszun, Wolfgang, Dr.**
**Roggendorfstrasse 55**
**W-5000 Köln 80(DE)**
Erfinder: **Reiners, Jürgen, Dr.**
**Carl-Rumpff-Strasse 57**
**W-5090 Leverkusen 1(DE)**
Erfinder: **Schulze, Hans, Dr.**
**Wolfskaul 4**
**W-5000 Köln 80(DE)**

(54) **Spaltbare Tenside, Verfahren zu ihrer Herstellung und ihre Verwendung.**

(57) Die Erfindung betrifft neue spaltbare grenzflächenaktive Silan-Derivate der Formel

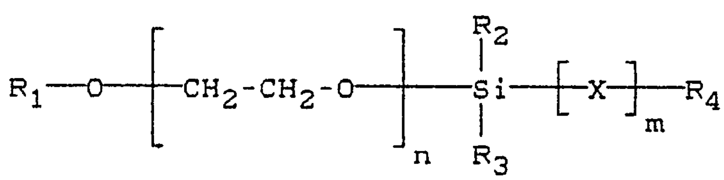

(I) ,

in der $R_1$, n, $R_2$, $R_3$, X, m und $R_4$ die in der Beschreibung angegebene Bedeutung haben, ferner Verfahren zur Herstellung dieser Silan-Derivate und die Verwendung dieser Verbindungen als Tenside.

EP 0 416 402 A2

## SPALTBARE TENSIDE, VERFAHREN ZU IHRER HERSTELLUNG UND IHRE VERWENDUNG

Die Erfindung betrifft neue spaltbare grenzflächenaktive Verbindungen (Tenside), Verfahren zu ihrer Herstellung und ihre Verwendung zur Herstellung von Emulsionen oder anderen mehrphasigen Zubereitungen.

Tenside sind Verbindungen, deren Moleküle sich aus hydrophilen und hydrophoben Teilen aufbauen. Infolge ihres amphiphilen Charakters sind diese Verbindungen grenzflächenaktiv und reichern sich an der Grenzfläche zwischen einer wässrigen Phase und einer hydrophoben Phase an. Bei der hydrophoben Phase kann es sich um ein Gas, eine Flüssigkeit oder einen Feststoff handeln. Bei der Anreicherung bilden die Tenside monomolekulare Filme an den Grenzflächen, wodurch die Eigenschaften der Systeme entscheidend beeinflußt werden, was sowohl zu erwünschten als auch zu unerwünschten Effekten führen kann.

Bei der Klassifizierung der Tenside nach ihren hydrophoben Gruppen unterscheidet man solche mit Kohlenwasserstoffgruppen, teil- oder perfluorierten hydrophoben Resten und solchen auf Siloxan- oder Polyether-Basis.

Bei der Klassifizierung nach hydrophilen Gruppen unterscheidet man zwischen anionischen Tensiden, deren hydrophile Teile durch Anionen der Säuren des Phosphors, Schwefels oder der Carbonsäuren gebildet werden, kationischen Tensiden mit quaternierten Stickstoff-Funktionen und nichtionischen Tensiden, deren hydrophile Gruppen durch Polyethylenglykolether oder Polyalkohole gebildet werden.

Allen diesen bekannten Tensiden ist gemeinsam, daß sie ihre oberflächenaktiven Eigenschaften erst durch biologischen Abbau, durch unspezifissche chemische Zerstörung oder aber, im Falle anionischer Tenside, durch Komplexierung z.B. mit $Ca^{++}$ oder $Al^{+++}$ verlieren. In den letzten Jahren wurden aber für Tenside sehr interssante Anwendungsmöglichkeiten gefunden, die jedoch erfordern, daß die Tenside, unmittelbar nachdem sie ihren Zweck erfüllt haben, im Reaktionsmedium in nicht mehr grenzflächenaktive Bruchstücke gespalten werden, z.B. durch eine pH-Wertänderung, und damit ihre grenzflächenaktive Wirkung verlieren [s. (a) J. Org. Chem. 1982, 47 , 311 -315; (b) 1982, 47 , 2221 - 2223; (c) 1984, 49 , 4545 -4547). In (a), (b) und (c) werden spaltbare kationaktive Tenside beschrieben und zwar werden in (a) und (b) kationaktive Tenside mit Ketalgruppen für die Anwendung in neutralen und basischen Medien vorgeschlagen; sie haben jedoch den Nachteil, daß sie nur unter drastischen Bedingungen (bei pH-Werten < 1), z.B. mit Hilfe 5 %iger Salzsäure spaltbar sind. In (c) werden kationische Tenside beschrieben, die Monoalkoxysilaneinheiten enthalten und die ebenfalls nur unter drastischen Bedingungen (bei pH-Werten < 1 oder > 12) spaltbar sind.

Die bislang bekannten spaltbaren Tenside haben den Nachteil, daß sie zum einen nur unter drastischen Bedingungen, d.h. bei pH-Werten < 1 und > 12 spaltbar und außerdem kationaktiv sind. In der Praxis sind aber wegen ihrer universelleren Anwendbarkeit und ihrer geringeren Elektrolytempfindlichkeit nichtionische Tenside und zwar besonders solche gefragt, die bereits unter milden Bedingungen, z.B. bei pH-Werten > 1 und < 11 gespalten werden.

Überraschenderweise wurde gefunden, daß Silan-Derivate einer bestimmten Struktur diese gewünschten Eigenschaften aufweisen.

Die Erfindung betrifft daher Silan-Derivate der Formel

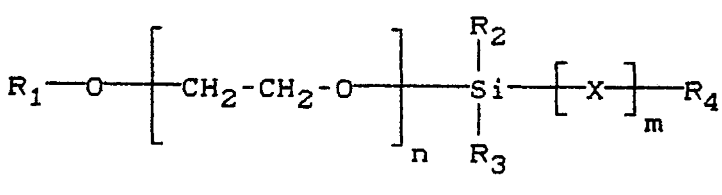

(I) ,

in der

$R_1$ H oder $C_1$-$C_4$-Alkyl,

n eine ganze Zahl von 2 - 300,

$R_2$ und $R_3$ unabhängig voneinander $C_1$-$C_{16}$-Alkyl oder Phenyl,

X -O-, -S-, -$NR_5$- ($R_5$: Wasserstoff oder $C_1$-$C_4$-Alkyl) oder

$$-[O-CH_2-CH_2]_r-O-$$

(r: ganze Zahl von 1-100) und
m Null oder 1 bedeuten und
$R_4$ H, $C_1$-$C_{36}$-Alkyl, $C_2$-$C_{36}$-Alkenyl, $C_5$-$C_{36}$-Cycloalk(en)yl, $C_7$-$C_{36}$-Aralkyl, $C_6$-$C_{36}$-Aryl, einen Rest der Formel (II)

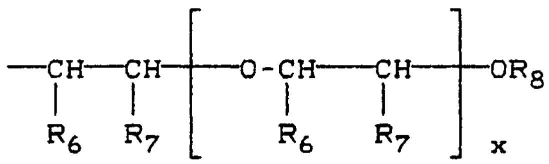

(II)

in der einer der Reste $R_6$ und $R_7$ für Methyl und der andere für H steht und $R_8$ $C_1$-$C_4$-Alkyl bedeutet und x für eine ganze Zahl von 10 bis 300 steht,
oder einen Rest der Formel (III)

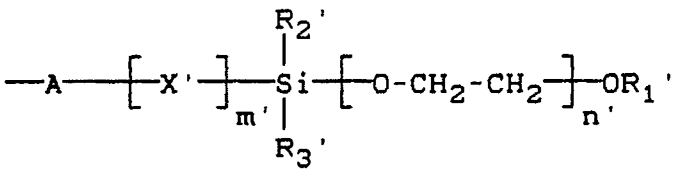

(III)

bedeutet, in der
$R_1'$, $R_2'$, $R_3'$, $X'$, $m'$ und $n'$ die unter Formel (I) für $R_1$, $R_2$, $R_3$, X, m und n angegebenen Bedeutungen haben und
A für einen 2-wertigen hydrophoben Rest, z.B. einen mindestens 12 C-Atome aufweisenden Alk(en)ylen-, Oxaalkylen-, Cycloalk(en)ylen-, Alkarylen- oder Arylalkylenrest steht,
mit der Maßgabe, daß die Summe der in den Resten $R_2$, $R_3$ und $R_4$ enthaltenen C-Atome mindestens 14 beträgt.

Als Vertreter der für $R^4$ genannten Reste seien beispielsweise genannt:
$C_1$-$C_{36}$-Alkylreste wie der Methyl-, Ethyl-, n- und i-Propyl, n- und sec-Butyl-, 2-Ethylhexyl-, n-Decyl-n-Dodecyl-, Hexadecyl-, Octadecyl- und Behenyl($C_{22}$)-Rest;
$C_2$-$C_{36}$-Alkenylreste wie der Propenyl-, Butenyl-, Hexenyl-, Octenyl-, Hexadecenyl- und Octadecenyl-Rest;
$C_5$-$C_{36}$-Cycloalk(en)ylreste wie der Cyclopentyl-, Cyclohexyl- und Cyclopentadienyl-Rest, durch Alkylgruppen substituierte Cyclohexylreste wie der Methylcyclohexyl-, Dimethylcyclohexyl- und tert.-Butylcyclohexyl-Rest;
$C_7$-$C_{36}$-Aralkylreste wie der Benzyl-, der $\beta$-Phenylethylrest und durch Alkylgruppen substituierte Benzylreste wie der Methyl-benzyl-, Nonyl-benzyl- und der Dodecyl-benzyl-Rest;
$C_6$-$C_{36}$-Arylreste wie der Phenyl-, 4-Octyl-phenyl-, 4-Nonyl-phenyl- und 4-Dodecyl-phenyl-Rest.

Als Vertreter der für A genannten 2-wertigen, hydrophoben, mindestens 12 C-Atome aufweisenden Reste seien beispielsweise genannt:
$C_{12}$-$C_{36}$-Alkylenreste wie der Dodecylen-, Hexadecylen-und Octadecylen-Rest;
$C_6$-$C_{36}$-Alkenylenreste wie der Hexadecenylen- und Octadecenylen-Rest, hydrophobe Oxaalkylen-Reste, z.B. Poly-(1-methyl-3-oxa)-propylen-Reste der Formeln

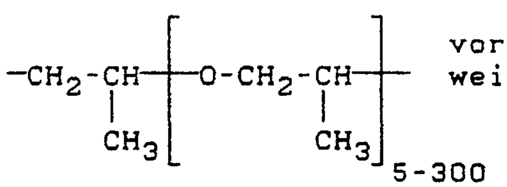

vorzugsweise

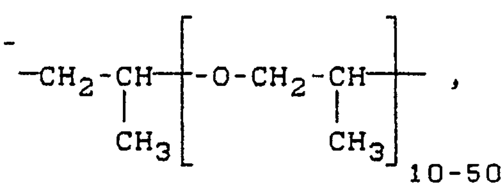

,

und Alkylen-poly-(1-methyl-3-oxy-)propylen-Reste der Formeln

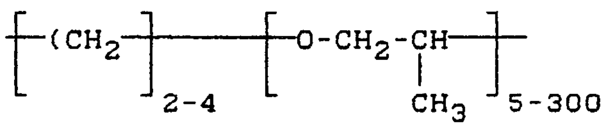

, z.B.

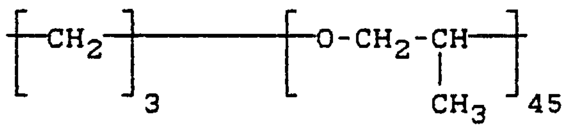

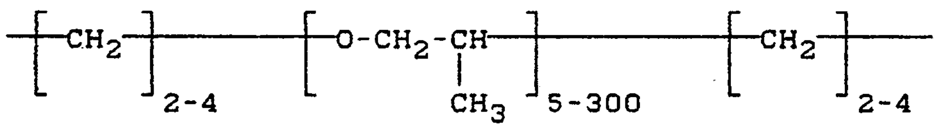

,

z.B.

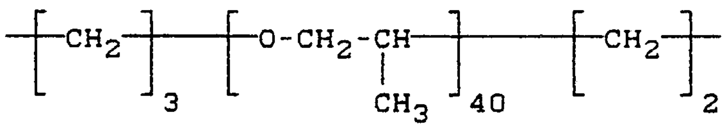

$C_{12}$-$C_{36}$-Cycloalk(en)ylenreste wie der Cyclohexylen-, Methylcyclohexylen-, Cyclohexenylen- und der Dicyclopentadiendimethylen-Rest.

Als Vertreter der für $R_2$ und $R_3$ genannten $C_1$-$C_{16}$-Alkylreste seien beispielsweise genannt: der Methyl-, Ethyl-, n- und sec.-Butyl-, der i-Pentyl-, n-Hexyl-, n-Decyl-, Undecyl-, Dodecyl-, Tridecyl- und Hexadecyl-Rest.

Bevorzugt sind die Silan-Derivate der Formel (I), wenn in dieser
$R_1$ $C_1$-$C_4$-Alkyl,
n eine ganze Zahl von 5-50,
$R_2$ und $R_3$ unabhängig voneinander $C_1$-$C_{16}$-Alkyl oder Phenyl,
X -O-, -S-, -$NR_5$- ($R_5$: Wasserstoff oder $C_1$-$C_4$-Alkyl) oder

$$-[O-CH_2-CH_2]_r-O-$$

(r: ganze Zahl von 5-50) und
m 0 oder 1 bedeuten und
$R_4$ für $C_1$-$C_{20}$-Alkyl, $C_2$-$C_{20}$-Alkenyl, $C_7$-$C_{20}$-Aralkyl, $C_6$-$C_{20}$-Aryl, oder für einen Rest der Formel

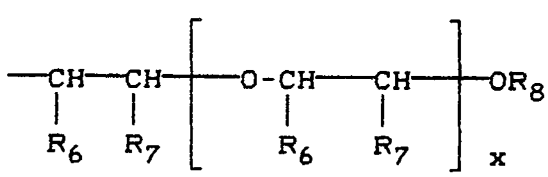

(II)

steht, in der einer der Reste $R_6$ und $R_7$ für Methyl und der andere für H steht, $R_8$ $C_1$-$C_4$-Alkyl ist und x für eine ganze Zahl von 10 bis 50 steht.

Besonders bevorzugt sind die Silan-Derivate der Formel (I), wenn in dieser
$R_1$ Methyl oder Ethyl,
n eine ganze Zahl von 5 - 50
$R_2$ und $R_3$ unabhängig voneinander $C_1$-$C_{16}$-Alkyl oder Phenyl
X -O-, -S-, -NH- oder

$$-[O-CH_2CH_2]_r-O-$$

mit r = n
m 1 und
$R_4$ $C_8$-$C_{20}$-Alkyl, $C_8$-$C_{20}$-Aralkyl oder $C_6$-$C_{20}$-Aryl bedeuten oder $R_4$ = $R_1$ ist.

Als Vertreter der erfindungsgemäßen spaltbaren Silan-Derivate der Formel (I) seien beispielsweise die in der nachstehenden Tabelle 1 zusammengestellten Verbindungen genannt; die Herstellung der Verbindungen 1 - 13 ist in den Beispielen 1 - 13 beschrieben ist.

Tabelle 1

| Herstellung beschrieben in Beispiel | erfindungsgemäße Silan-Derivate Formel (I) |
|---|---|
| 1, 2 und 3 | 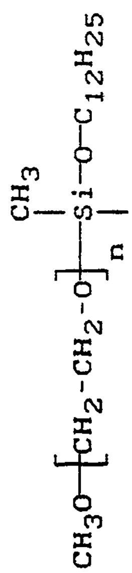 n=10,16,30 |
| 4,5,6 und 7 | 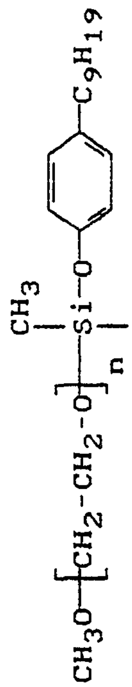 n=10,16,30,45 |
| 8 | 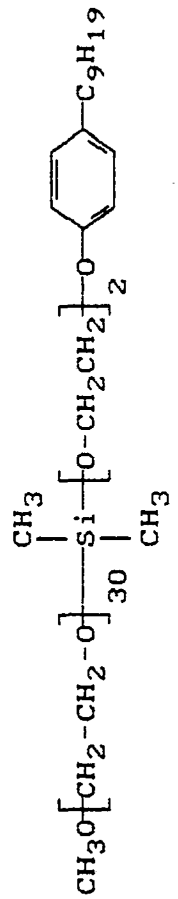 |
| 9 | 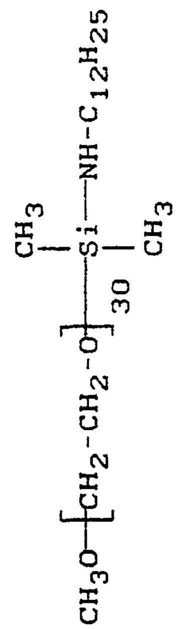 |

**Tabelle 1** (Fortsetzung)

| Herstellung beschrieben in Beispiel | erfindungsgemäße Silan-Derivate Formel (I) |
|---|---|
| 10 und 11 | 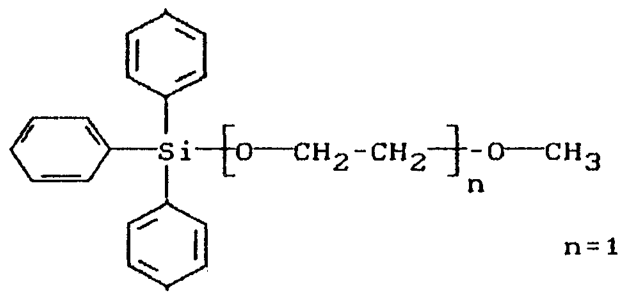 n=15,30 |
| 12 und 13 | 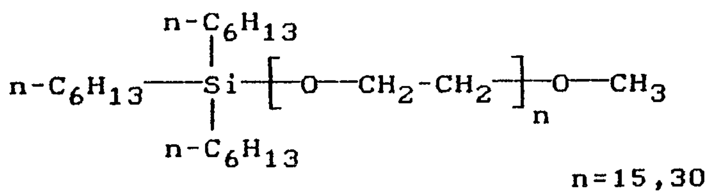 n=15,30 |
| | 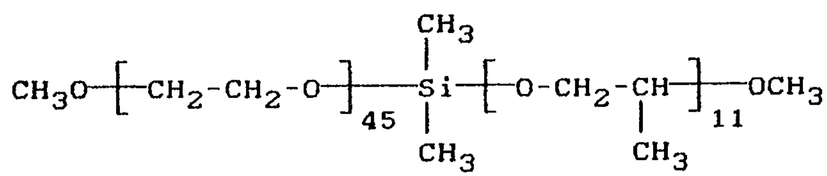 |
| | 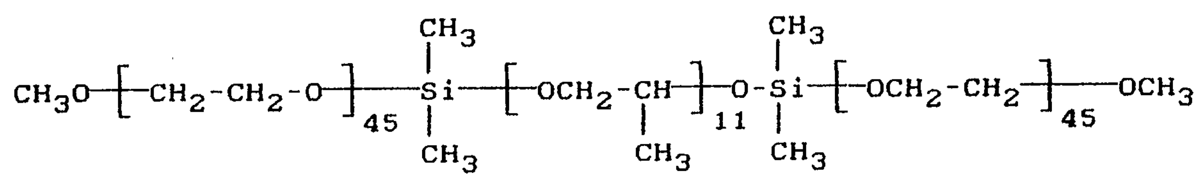 |

Tabelle 1 (Fortsetzung)

| Herstellung beschrieben in Beispiel | erfindungsgemäße Silan-Derivate Formel (I) |
|---|---|
| 14-18 | 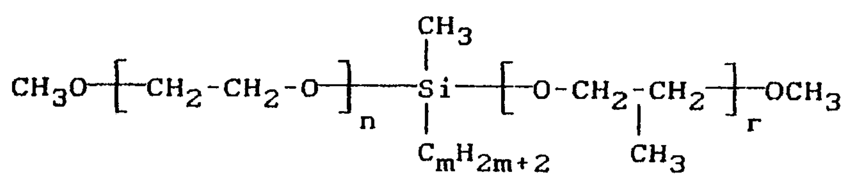 n = r = 5,7,10,16,30<br>m = 11 (65 %) m = 13 (35 %) |

Die erfindungsgemäßen Tenside zeichnen sich durch eine ausgezeichnete Emulgatorwirkung im pH-Wertbereich von 5 - 10 aus; die mit ihnen hergestellten Emulsionen sind in diesem pH-Wertbereich über Wochen stabil. Außerhalb dieses pH-Wertbereiches werden die erfindungsgemäßen Tenside dagegen schnell in Grenzflächen-inaktive Teilstücke gespalten. Die mit diesen Tensiden hergestellten Emulsionen zerfallen daher außerhalb des pH-Bereichs von 5 - 10 in ihre wäßrigen und hydrophoben Phasen. Die erfindungsgemäßen Tenside eignen sich daher besonders als Emulgatoren für die Behandlung von Textilien und Fasern, die Metallbearbeitung und die Ölrückgewinnung.

Die Erfindung betrifft ferner die Verfahren zur Herstellung der erfindungsgemäßen Silan-Derivate der Formel (I). Die Silan-Derivate der Formel (I) werden - für den Fall, daß m = 1 ist, dadurch erhalten, daß man Silane der Formel (V)

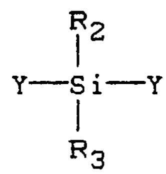 (V)

in der
$R_2$ und $R_3$ die unter Formel (I) angegebene Bedeutung haben und
Y ein hydrolisierbares Atom oder eine hydrolisierbare Gruppe bedeutet,
zunächst entweder mit Verbindungen mit reaktivem Wasserstoff der Formeln

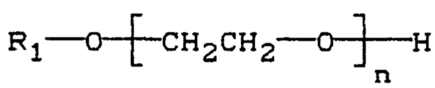 (VI),

in der $R_1$ und n die unter Formel (I) angegebene Bedeutung haben,
oder
$R_4$-X-H (VII),
in der $R_4$ und X die unter Formel (I) angegebene Bedeutung haben,
zu Silanverbindungen der Formeln

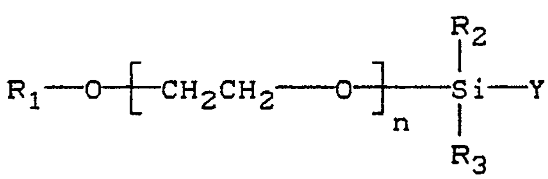 (VIIIa)

beziehungsweise

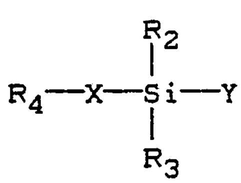 (VIIIb)

umgesetzt, in denen
$R_1$, $R_2$, $R_3$, $R_4$, n und X die unter Formel (I) und Y die unter Formel (V) angegebene Bedeutung haben;
diese Silan-Verbindungen (VIIIa) oder (VIIIb) werden anschließend in einer zweiten Reaktionsstufe wieder mit den Verbindungen der Formeln (VII) bzw. (VI) umgesetzt und zwar die Silan-Verbindungen (VIIIa) mit den Verbindungen der Formel (VII), die Silan-Verbindungen (VIIIb) mit den Verbindungen der Formel (VI).

Besonders einfach sind die Silan-Verbindungen der Formel (I) erhältlich, wenn in dieser m = 1, X = --$[OCH_2CH_2]_r$-O-(mit r = n) und $R_4$ = $R_1$ ist, d.h. wenn der Rest X-$R_4$ = $R_1O$-$[CH_2CH_2$-$O]_n$- ist. Diese

Verbindungen sind in einer einstufigen Umsetzung von Verbindung (V) mit 2 Molen Verbindung der Formel (VI) erhältlich. Anstelle einer Verbindung der Formel (V) können auch Gemische aus verschiedenen Verbindungen der Formel (V) eingesetzt werden.

Die erfindungsgemäßen Silan-Derivate der Formel (I), wenn in dieser m = 0 ist, werden durch Umsetzung von Silanen der Formel (IX)

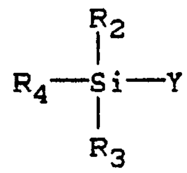

(IX)

in der $R_2$, $R_3$ und $R_4$ die unter Formel (I) und Y die unter Formel (V) angegebene Bedeutung haben, mit Verbindungen mit reaktivem Wasserstoff der Formel (VI) erhalten.

Für Y seien als hydrolytisch abspaltbare Gruppe z.B. Alkoxygruppen, wie Methoxy- oder Ethoxygruppen, oder Carboxylat-Gruppen, Pseudohalogenide, wie Cyanid-oder Rhodanid-Gruppen und als hydrolytisch abspaltbare Atome Halogenatome, bevorzugt Cl- und Bromatome genannt.

Die Umsetzungen der Silane der Formeln (V), (VIIIa), (VIIIb) und (IX) werden in einer Inertgasatmosphäre in unter den Reaktionsbedingungen inerten organischen Lösungsmitteln in Gegenwart von Basen bei Temperaturen von 0 - 100 °C vorgenommen.

Die Silane der Formel (V) werden mit den Verbindungen mit reaktivem Wasserstoff in einem Molverhältnis von 3 - 6 : 1, die Silane der Formeln (VIIIa), (VIIIb) und (IX) in einem Molverhältnis von 1 : 1 umgesetzt.

Als Basen haben sich besonders tertiäre Amine, z.B. Triethylamin und Pyridin bewährt.

Als unter den Reaktionsbedingungen inerte organische Lösungsmittel seien beispielsweise aliphatische, cycloaliphatische und aromatische Kohlenwasserstoffe genannt;
besonders bewährt haben sich Cyclohexan, Benzol und Toluol. Bevorzugt werden die Lösungsmittel in einer solchen Menge eingesetzt, daß das Gewichtsverhältnis Reaktanten:Lösungsmittel 1:1 bis 1:20 beträgt.

Die Basen werden vorzugsweise im Überschuß eingesetzt bezogen auf die Menge an abzuspaltenden hydrolysierbaren Gruppen bzw. Atomen. Bei Verwendung tertiärer Amine entstehen die besonders leicht abtrennbaren Amoniumsalze und das überschüssige Amin kann nach der Reaktion destillativ entfernt werden. Besonders bewährt haben sich Molverhältnisse von tertiärem Amin / abzuspaltenden hydrolysierbaren Gruppen (Atomen) von 1,05 - 1,1 : 1.

Der Reaktionsumsatz läßt sich in einfacher Weise durch quantitative Bestimmung des entstehenden Ammoniumsalzes verfolgen. Nach beendeter Reaktion kann das Ammoniumsalz durch Filtration abgetrennt und das erfindungsgemäße Tensid durch Entfernen des Lösungsmittels isoliert werden.

Die für die Herstellung der erfindungsgemäßen Silan-Derivate der Formel (I) erforderlichen Ausgangsverbindungen (V), (VI), (VII) und (IX) sind entweder im Handel erhältlich oder können nach an sich bekannten Reaktionen hergestellt werden (siehe z.B. Houben-Weyl Methoden der organischen Chemie 4. Aufl. Band 13/5. S. 106, Band E 20 S. 1367).

Die Erfindung betrifft ferner die Verwendung der erfindungsgemäßen Silan-Derivate der Formel (I) als Tenside.

## Beispiele

### Beispiele 1 - 9:

A) Herstellung der Silan-Verbindungen der Formel (VIIIa) (allgemeine Arbeitsweise):

5 Mol Dichlordimethylsilan, die sich in einem mit trockenem Stickstoff gefüllten Reaktionsgefäß befinden, werden bei 30 °C unter Rühren gleichzeitig

a) mit der 50 Vol.-%igen Lösung von einem Mol einer Verbindung mit reaktivem Wasserstoff (Verbindung der Formel (VII)) in wasserfreiem Toluol und

b) mit der 50 Vol.-%igen Lösung von 1,05 Mol Triethylamin in wasserfreiem Toluol versetzte. Das

Reaktionsgemisch wird auf 70 °C erwärmt und 2 Stunden bei dieser Temperatur gerührt. Anschließend wird der Ammoniumsalz-Niederschlag abgesaugt und das Filtrat durch Vakuumdestillation vom Lösungsmittel und überschüssigen Dichlordimethylsilan befreit.

B) Herstellung der erfindungsgemäßen Silan-Derivate der Formel (I):

1 Mol der in Stufe (A) erhaltenen Silan-Verbindung wird mit einer 50 Vol-%igen Lösung einer Verbindung der Formel (VII) in trockenem Toluol und der 50 Vol.-%igen Lösung von 1,05 Mol Triethylamin in trockenem Toluol versetzt. Das Reaktionsgemisch wird 4 Stunden bei 50 °C gerührt. Anschließend wird das Ammoniumsalz abgesaugt und das Filtrat durch Vakuumdestillation vom Lösungsmittel befreit. In der nachstehenden Tabelle 2 sind die für die Umsetzung der 5 Mol Dichlordimethylsilan in Stufe (A) verwendeten Verbindungen mit reaktivem Wasserstoff der Formel (VI), die in Stufe (A) erhaltenen Silan-Verbindungen der Formel (VIIIa) und die in Stufe (B) für die Umsetzung der Chlorsilan-Verbindungen (VIIIa) verwendeten Verbindungen mit reaktivem Wasserstoff der Formel (VII) zusammengestellt.

Tabelle 2

| Bsp. | Verbindungen der Formel (VI) | in Stufe (A) erhaltene Cl-Silan-Verbindungen der Formel (VIIIa) | Verbindung der Formel (VII) |
|---|---|---|---|
| 1 | $CH_3O{-}[CH_2{-}CH_2{-}O]_{10}{-}H$ | $Cl{-}Si(CH_3)_2{-}[O{-}CH_2{-}CH_2]_{10}{-}O{-}CH_3$ | $n{-}C_{12}H_{25}{-}OH$ |
| 2 | $CH_3O{-}[CH_2{-}CH_2{-}O]_{16}{-}H$ | $Cl{-}Si(CH_3)_2{-}[O{-}CH_2{-}CH_2]_{16}{-}O{-}CH_3$ | $n{-}C_{12}H_{25}{-}OH$ |
| 3 | $CH_3O{-}[CH_2{-}CH_2{-}O]_{30}{-}H$ | $Cl{-}Si(CH_3)_2{-}[O{-}CH_2{-}CH_2]_{30}{-}O{-}CH_3$ | $n{-}C_{12}H_{25}{-}OH$ |
| 4 | $CH_3O{-}[CH_2{-}CH_2{-}O]_{10}{-}H$ | $Cl{-}Si(CH_3)_2{-}[O{-}CH_2{-}CH_2]_{10}{-}O{-}CH_3$ | $n{-}C_9H_{19}$ 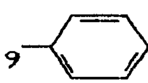 OH |
| 5 | $CH_3O{-}[CH_2{-}CH_2{-}O]_{16}{-}H$ | $Cl{-}Si(CH_3)_2{-}[O{-}CH_2{-}CH_2]_{16}{-}O{-}CH_3$ | $n{-}C_9H_{19}$ 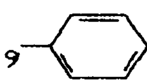 OH |
| 6 | $CH_3O{-}[CH_2{-}CH_2{-}O]_{30}{-}H$ | $Cl{-}Si(CH_3)_2{-}[O{-}CH_2{-}CH_2]_{30}{-}O{-}CH_3$ | $n{-}C_9H_{19}$ 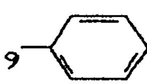 OH |

<u>Tabelle 2</u> (Fortsetzung)

| Bsp. | Verbindungen der Formel (VI) | in Stufe (A) erhaltene Cl-Silan-Verbindungen der Formel (VIIIa) | Verbindung der Formel (VI) |
|---|---|---|---|
| 7 | $CH_3O-[CH_2-CH_2-O]_{45}-H$ | $Cl-Si(CH_3)_2-[O-CH_2-CH_2]_{45}-O-CH_3$ | 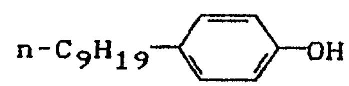 |
| 8 | $CH_3O-[CH_2-CH_2-O]_{30}-H$ | $Cl-Si(CH_3)_2-[O-CH_2-CH_2]_{30}-O-CH_3$ | 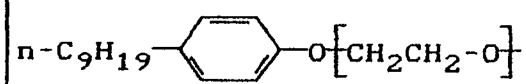 |
| 9 | $CH_3O-[CH_2-CH_2-O]_{30}-H$ | $Cl-Si(CH_3)_2-[O-CH_2-CH_2]_{30}-O-CH_3$ | $n-C_{12}H_{25}-NH_2$ |

Beispiele 10 - 13

A) Herstellung der erfindungsgemäßen Silan-Derivate der Formel (I), in der n = 0 ist (allgemeine Arbeitsweise):

Die 50 Vol.-%ige Lösung von einem Mol Silan-Verbindung der Formel (IX) in trockenem Toluol wird in einem mit trockenem Stickstoff gefüllten Reaktionsgefäß bei Raumtemperatur unter Rühren gleichzeitig mit der 50 Vol.-%igen Lösung einer Verbindung mit reaktivem Wasserstoff der Formel (VI) in trockenem Toluol und der Lösung von 1,05 Mol Pyridin in 200 ml trockenem Toluol versetzt. Das Reaktionsgemisch wird auf 70° C erwärmt und eine Stunde bei dieser Temperatur gerührt. Anschließend wird der Ammoniumsalz-Niederschlag abgesaugt und das Filtrat im Vakuum vom Lösungsmittel befreit.

In der nachstehenden Tabelle 3 sind die verwendeten Silan-Verbindungen der Formel (IX) und die Verbindungen mit aktivem Wasserstoff der Formel (VI) zusammengestellt.

Tabelle 3

| Bsp. | Silan-Verbindung der Formel (IX) | Verbindung der Formel (VI) |
|---|---|---|
| 10 | $[n-C_6H_{13}]_3-Si-Cl$ | $CH_3O-[CH_2-CH_2-O]_{10}-H$ |
| 11 | $[n-C_6H_{13}]_3-Si-Cl$ | $CH_3O-[CH_2-CH_2-O]_{16}-H$ |
| 12 | 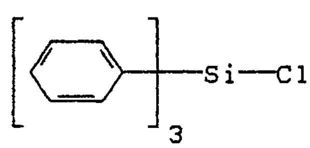 | $CH_3O-[CH_2-CH_2-O]_{30}-H$ |
| 13 | 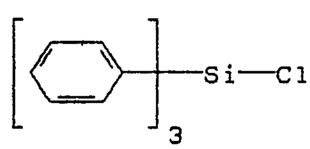 | $CH_3O-[CH_2-CH_2-O]_{10}-H$ |

Beispiele 14-18

A) Herstellung der erfindungsgemäßen Silan-Derivate der Formel (I), in der $R_1 = R_4 = CH_3$, m = 1 und H = $-[O-CH_2-CH_2-]_r-O-$ mit r = n ist (allgemeine Arbeitsweise):

Die 20 Vol.-%ige Lösung von einer Mischung von 0,65 Mol Dichlormethylundecylsilan und 0,35 Mol Dichlormethyltridecylsilan in trockenem Toluol wird in einem mit trockenem Stickstoff gefüllten Reaktionsgefäß bei Raumtemperatur unter Rühren gleichzeitig mit der 20 Vol.-%igen Lösung von 2,0 Mol einer Verbindung mit reaktivem Wasserstoff der Formel (VI) in trockenem Toluol und der Lösung von 2,05 Mol Pyridin in 200 ml trockenem Toluol versetz. Das Reaktionsgemisch wird auf 70° C erwärmt und eine Stunde

bei dieser Temperatur gerührt. Anschließend wird der Ammoniumsalz-Niederschlag abgesaugt und das Filtrat im Vakuum vom Lösungsmittel befreit.

In der nachstehenden Tabelle 4 sind die verwendeten Dichlorsilan-Verbindungen der Formel (V) und die Verbindungen mit aktivem Wasserstoff der Formel (VI) zusammengestellt.

Tabelle 4

| Bsp. | Dichlorsilan-Verbindung der Formel (V) | Verbindung der Formel (VI) |
|---|---|---|
| 14 | $CH_3$<br>\|<br>$C_mH_{2m+1}Si-Cl_2$<br>m=11 (65%) m=13 (35 %) | $CH_3O-(CH_2CH_2O)_5$—H |
| 15 | $CH_3$<br>\|<br>$C_mH_{2m+1}Si-Cl_2$<br>m=11 (65%) m=13 (35%) | $CH_3O-(CH_2CH_2O)_7$—H |
| 16 | $CH_3$<br>\|<br>$C_mH_{2m+1}Si-Cl_2$<br>m=11 (65%) m=13 (35%) | $CH_3O-(CH_2CH_2O)_{10}$—H |

Tabelle 4 (Fortsetzung)

| Bsp. | Dichlorsilan-Verbindung der Formel (V) | Verbindung der Formel (VI) |
|---|---|---|
| 17 | $CH_3$<br>\|<br>$C_mH_{2m+1}Si-Cl_2$<br>m=11 (65%) m=13 (35 %) | $CH_3O-(CH_2CH_2O)_{16}$—H |
| 18 | $CH_3$<br>\|<br>$C_mH_{2m+1}Si-Cl_2$<br>m=11 (65%) m=13 (35%) | $CH_3O-(CH_2CH_2O)_{30}$—H |

Beispiel 19

A) Bestimmung der Emulgator-Eigenschaften und der Stabilität der erfindungsgemäßen Silan-Derivate in Abhängigkeit vom pH-Wert der wäßrigen Phase der mit ihrer Hilfe hergestellten Emulsionen.

Es wurden Emulsionen aus folgenden Komponenten hergestellt:

Wäßrige Phase:

a) wäßrige Pufferlösung, enthaltend 50 mmol $KH_2PO_4$/l; diese wäßrige Pufferlösung wird durch Zugabe von HCl und NaOH auf den gewünschten pH-Wert eingestellt;

b) Tensid-Lösung:

Sie enthält 6 Gew.-% des zu untersuchenden Tensides, gelöst in destilliertem Wasser;

Hydrophobe Phase:

c) Isododecan

Herstellung der Emulsionen:

Die Komponenten (a), (b) und (c) werden im Volumenverhältnis 2 : 2 : 1 gemischt und mit einem Rotor-Stator bei 10.000 U/min 1 Minute lang homogenisiert. Die entstandene 40 Vol.-%ige Öl in Wasser Emulsion enthält 3 Gew.-% Tensid (Silan-Derivat) bezogen auf das Volumen der organischen Phase.

Die Stabilität der erhaltenen Emulsionen wurde nach einem Tag und nach dreiwöchiger Standzeit begutachtet, wobei folgende Wertungen angewendet wurden:

Stabilität = I: die Emulsion trennt sich im Laufe einiger Tage in eine konzentrierte weiße Oberschicht (Rahmschicht) und eine milchig-trübe bis klare wässrige Phase. Die Rahmschicht behält während des Beobachtungszeitraumes ihre weiße Farbe und verändert sich nicht. Es findet keine Ausbildung einer separaten Isododecanschicht statt.

Stabilität = II: Es bildet sich im Verlauf einiger Stunden eine Rahmschicht aus; die Rahmschicht weist nach einem Tag eine glasige Konsistenz auf (Anzeichen für eine Tröpfchenvergrößerung/Koaleszenz).

Außerdem ist nach einem Tag bereits die Bildung einer Isododecanschicht auf der Rahmschicht erkennbar; das Volumen dieser Isododecanschicht nimmt im Laufe des Beobachtungszeitraumes zu.

Stabilität = III: Die Emulsion trennt sich innerhalb weniger Minuten in eine wäßrige Phase und in eine Isododecan-Phase. Eine Rahmschicht bildet sich nicht, beziehungsweise nur ansatzweise, aus.

In der nachfolgenden Tabelle 5 sind die für die einzelnen erfindungsgemäßen Tenside erhaltenen Stabilitätswerte bei den verschiedenen pH-Werten zusammengestellt.

Zum Vergleich wurden ferner die Stabilitätswerte zweier zum Stand der Technik gehörenden, strukturverwandten Tenside angegeben.

Tabelle 5

| pH-Wert der wäßrigen Phase | Stabilitäten | | | | | | | |
|---|---|---|---|---|---|---|---|---|
| | Tensid gemäß Beispiel 1 | Tensid A | Tensid gemäß Beispiel 3 | Tensid B | Tensid gemäß Beispiel 6 | Tensid gemäß Beispiel 8 | Tensid gemäß Beispiel 17 | Tensid gemäß Beispiel 18 |
| 3 | III | I | III | I | III | III | III | III |
| 4 | III | I | III | I | II | II | II | II |
| 5 | III | I | III | I | I | II | I | I |
| 6 | I | I | I | I | I | I | I | I |
| 7 | I | I | I | I | I | I | I | I |
| 8 | I | I | I | I | I | I | I | I |
| 9 | I | I | I | I | I | I | I | I |
| 10 | I | I | I | I | I | I | I | I |
| 11 | II | I | II | I | II | II | II | II |
| 12 | III | I | III | I | III | III | II | III |
| 13 | III | I | III | I | III | III | III | III |

Tenside gemäß dem Stand der Technik: A) $CH_3-[O-CH_2-CH_2]_{10}-O-C_{10}H_{25}$

B) $CH_3-[O-CH_2-CH_2]_{30}-O-C_{12}H_{25}$

## Ansprüche

1. Silan-Derivate der Formel

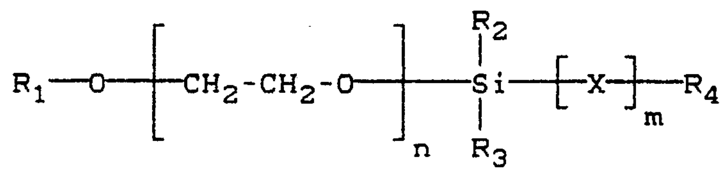

(I) ,

in der
$R_1$ H oder $C_1$-$C_4$-Alkyl,
n eine ganze Zahl von 2 - 300,
$R_2$ und $R_3$ unabhängig voneinander $C_1$-$C_{16}$-Alkyl oder Phenyl,
X -O-, -S-, -$NR_5$- ($R_5$: Wasserstoff oder $C_1$-$C_4$-Alkyl) oder

$$-\left[O-CH_2-CH_2\right]_r-O-$$

(r: ganze Zahl von 1-100) und
m Null oder 1 bedeuten und
$R_4$ H, $C_1$-$C_{36}$-Alkyl, $C_2$-$C_{36}$-Alkenyl, $C_5$-$C_{36}$-Cycloalk(en)yl, $C_7$-$C_{36}$-Aralkyl, $C_6$-$C_{36}$-Aryl, einen Rest der Formel (II)

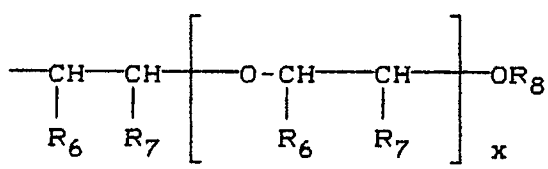

(II)

in der einer der Reste $R_6$ und $R_7$ für Methyl und der andere für H steht und $R_8$ $C_1$-$C_4$-Alkyl bedeutet und x für eine ganze Zahl von 10 bis 300 steht,
oder einen Rest der Formel

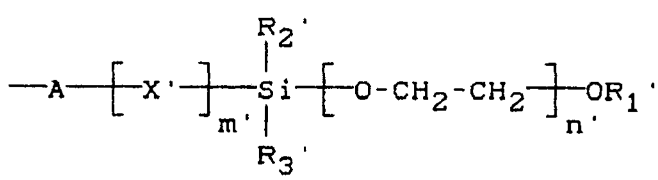

(III)

bedeutet, in der
$R_1'$, $R_2'$, $R_3'$, $X'$, $m'$ und $n'$ die unter Formel (I) für $R_1$, $R_2$, $R_3$, X, m und n angegebenen Bedeutungen haben und
A für einen 2-wertigen hydrophoben Rest steht,
mit der Maßgabe, daß die Summe der in den Resten $R_2$, $R_3$ und $R_4$ enthaltenen C-Atome mindestens 14 beträgt.

2. Silan-Derivate nach Anspruch 1, dadurch gekennzeichnet, daß in Formel (I)
$R_1$ $C_1$-$C_4$-Alkyl,
n eine ganze Zahl von 5-50,
$R_2$ und $R_3$ unabhängig voneinander $C_1$-$C_{16}$-Alkyl oder Phenyl,
X -O-, -S-, -$NR_5$- ($R_5$: Wasserstoff oder $C_1$-$C_4$-Alkyl) oder

$$-\!\!\left[O-CH_2-CH_2\right]_r\!\!-O-$$

(r: ganze Zahl von 5-50) und
m 0 oder 1 bedeuten und
$R_4$ für $C_1$-$C_{20}$-Alkyl, $C_2$-$C_{20}$-Alkenyl, $C_7$-$C_{20}$-Aralkyl, $C_6$-$C_{20}$-Aryl, oder für einen Rest der Formel

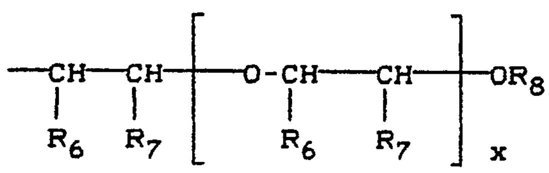

(II)

steht, in der einer der Reste $R_6$ und $R_7$ für Methyl und der andere für H steht, $R_8$ $C_1$-$C_4$-Alkyl ist und x für eine ganze Zahl von 10 bis 50 steht.
3. Silan-Derivate nach Anspruch 1, dadurch gekennzeichnet, daß in Formel (I)
$R_1$ Methyl oder Ethyl,
n eine ganze Zahl von 5 - 50
$R_2$ und $R_3$ unabhängig voneinander $C_1$-$C_{16}$-Alkyl oder Phenyl,
X -O-, -S-, -NH- oder

$$-\!\!\left[O-CH_2CH_2\right]_r\!\!-O-$$

mit r = n
m 1 und
$R_4$ $C_8$-$C_{20}$-Alkyl, $C_8$-$C_{20}$-Aralkyl oder $C_6$-$C_{20}$-Aryl bedeuten oder $R_4$ = $R_1$ ist.
4. Verfahren zur Herstellung der Silan-Derivate nach Ansprüchen 1, 2 oder 3, dadurch gekennzeichnet, daß man zur Herstellung der Silan-Derivate der Formel (I), wenn in dieser m = 1 ist, Silane der Formel

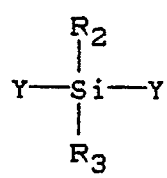

(V)

in der
$R_2$ und $R_3$ die in Anspruch 1 unter Formel (I) angegebene Bedeutung haben und
Y ein hydrolisierbares Atom oder eine hydrolisierbare Gruppe bedeutet,
zunächst entweder mit Verbindungen mit reaktivem Wasserstoff der Formeln

$$R_1-O-\!\!\left[CH_2CH_2-O\right]_n\!\!-H \qquad (VI),$$

in der $R_1$ und n die unter Formel (I) angegebene Bedeutung haben,
oder
$R_4$-X-H (VII),
in der $R_4$ und X die unter Formel (I) angegebene Bedeutung haben,
zu Silanverbindungen der Formeln

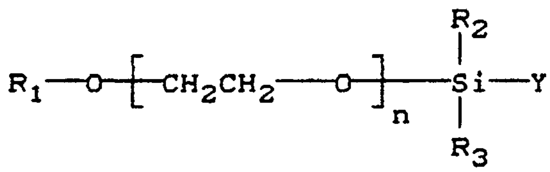

(VIIIa)

beziehungsweise

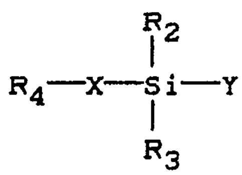

(VIIIb)

umgesetzt, in denen
$R_1$, $R_2$, $R_3$, $R_4$, n und X die unter Formel (I) und Y die unter Formel (V) angegebene Bedeutung haben und diese Silan-Verbindungen (VIIa) oder (VIIIb) anschließend in einer zweiten Reaktionsstufe erneut mit den Verbindungen der Formeln (VII) bzw. (VI) umgesetzt und zwar die Silan-Verbindungen (VIIIa) mit den Verbindungen der Formel (VII), die Silan-Verbindungen (VIIIb) mit den Verbindungen der Formel (VI).

5. Verfahren zur Herstellung der Silan-Derivate nach Ansprüchen 1, 2 oder 3, dadurch gekennzeichnet, daß man zur Herstellung der Silan-Derivate der Formel (I), wenn in dieser m = 0 ist Silane der Formel

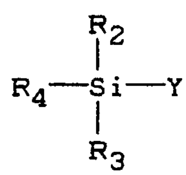

(IX)

in der $R_2$, $R_3$ und $R_4$ die in Anspruch 1 unter Formel (I) und Y die in Anspruch 4 unter Formel (V) angegebene Bedeutung haben,
mit Verbindungen mit reaktivem Wasserstoff der Formel

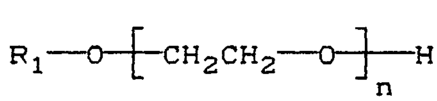

(VI),

in der $R_1$ und n die unter Formel (I) angegebene Bedeutung haben,
umsetzt.

6. Verfahren nach Anspruch 4 oder 5, dadurch gekennzeichnet, daß man die Umsetzung der Silane der Formeln (V), (VIIIa), (VIIIb) und (IX) in einer Inertgasatmosphäre in unter den Reaktionsbedingungen inerten organischen Lösungsmitteln in Gegenwart von Basen bei Temperaturen von 0 - 100 °C vornimmt.

7. Verwendung der Silan-Derivate nach Anspruch 1, 2 oder 3 als Tenside.